# EUROPÄISCHE PATENTSCHRIFT

(11) **EP 0 658 147 B1**
(45) Veröffentlichungstag und Bekanntmachung des Hinweises auf die Patenterteilung: **20.08.1997**
(21) Anmeldenummer: 94910366.7
(22) Anmeldetag: 04.03.1994
(51) Int. Cl.: B62H 3/10, B60R 9/10, B62H 3/00

(54) **ABSCHLIESSBARER FAHRRADSTÄNDER ZUR FIXIERUNG UND SICHERUNG EINES FAHRRADES**
LOCKABLE BICYCLE STAND FOR FASTENING AND SECURING BICYCLES
SUPPORT VERROUILLABLE DE SECURITE ET DE FIXATION DE BICYCLETTE

(30) Priorität: 05.04.1993 DE 4311135
(43) Veröffentlichungstag der Anmeldung: 21.06.1995
(73) Patentinhaber: PISTAUER-HEINIG, Franz, 81827 München (DE); THAMM, Gernot, D-86199 Augsburg (DE)
(72) Erfinder: PISTAUER-HEINIG, Franz, 81827 München (DE); THAMM, Gernot, D-86199 Augsburg (DE)
(86) Internationale Anmeldenummer: EP9400648
(87) Internationale Veröffentlichungsnummer: WO9422708

(56) Entgegenhaltungen:
- DE-A- 2 412 481
- DE-A- 4 314 368
- DE-C- 965 014
- GB-A- 2 245 238
- US-A- 3 887 075

## Beschreibung

Fahrradständer üblicher Bauart weisen zumeist zwei Bügel auf, die das Vorderrad festklemmen, sodaß dieses durch ein Fahrradschloß befestigt werden kann. D. h. Fahrradständer sind nicht oder kaum zur Sicherung eines Fahrrades gedacht, sondern nur zum geordneten Abstellen. Zum Stand der Technik ist das Dokument US-A-3 887 o75 zu nennen.

Dieses Dokument zeigt einen Fahrradständer gemäß dem Oberbegriff des Anspruchs 1. Hierbei handelt es sich um eine Abschließvorrichtung aus zwei im Abstand zueinander angeordneten, im wesentlichen nach oben ragenden Armen, in die das Fahrrad lose mit Hilfe eines Schlosses gesperrt wird.

Eine Verbesserung dieser unbefriedigenden Situation stellt nun die DE - OS 2412481 dar, ein verschließbarer Ständer für Fahrräder, bei dem das Unterrohr des Fahrrades fest in Mittel gesperrt ist und dadurch das gesamte Fahrrad zum Untergrund fest fixiert wird.

Der Erfindung liegt das Problem zugrunde, ein Fahrradsicherungssystem zu schaffen, das einfach zu handhaben, kosten günstig zu erwerben und in bestehende Fahrradhalterungen integriert werden kann. Mit Hilfe eines eigenen Schlosses ist ein sicheres, ordentliches und müheloses Abstellen des Fahrrades gewährleistet.

Diese Aufgabe wird gemäß der Erfindung durch die im Schutzanspruch 1 aufgeführten Merkmale gelöst. Vorteil Ausgestaltungen dazu sind in den Unteranspruchen angegeben.

Mit der Erfindung wird erreicht, das die Fahrräder sicher, ihrem Wert entsprechend und übersichtlicher als bisher geparkt werden können.

Mit einem, nach der Lehre der Anmeldung ausgeführten abschließbaren Fahrradständers sind folgende Vorteile verbunden:
1. Die Erfindung sichert nicht nur den Rahmen, sondern auch das Vorder- und Hinterrad, indem das Fahrrad fest auf dem Untergrund steht, und in keine Richtung be wegt werden kann.
2. Das Feststellen des Fahrrades ist leicht zu handhaben, da das Fahrrad durch leichtes Anheben, Einfahren oder durch seitliches Abstellen mit dem Sicherheitssystem fest verbunden wird und somit auch von älteren Menschen oder Kindern bedient werden kann.
3. Das Fahrradsicherungssystem funktioniert für alle gängigen Fahrräder und FahrradgröBen.
4. Seine einfache und stabile Konstruktion hat folgende Vorteile:
   a) das Fahrradsicherungssystem ist kostengünstig herzustellen.
   b) es ist fast wartungsfrei,
   c) schränkt Vandalismus ein,
   d) und birgt kaum Verletzungsgefahr in sich.
5. Als weiterer Vorteil kann angesehen werden, daß alte Fahrradabstellvorrichtungen nicht abgebaut werden müssen, sondern in Ergänzung mit der Erfindung den Fahrraddiebstahl verhindert.
6. An Fahrradparkplätzen kann Platz gespart werden, weil das Fahrradsicherungssystem nur den Platz in Anspruch nimmt, den das Fahrrad selbst in Anspruch nimmt.

Ausfübrungsbeispiele der Erfindung werden anhand der Figuren näher erläutert.
- Fig. 1: zeigt die Seitenansicht der Abschließvorrichtung mit Halteeinrichtungen.

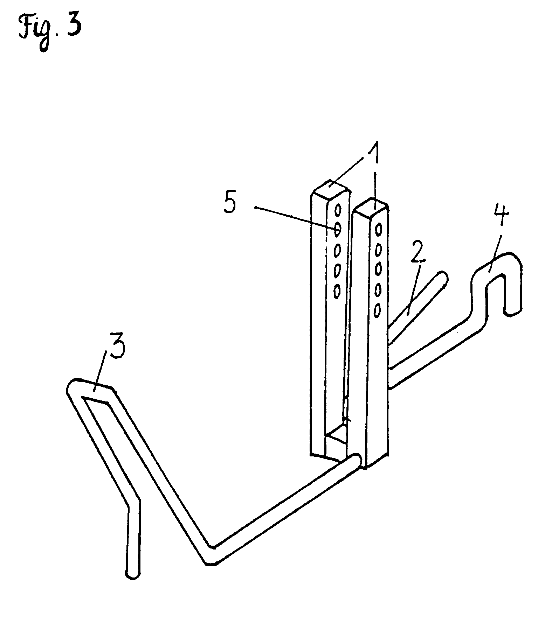

- Fig. 2: zeigt die Draufsicht der Abschließvorrichtung mit Halteeinrichtungen.
- Fig. 3: zeigt die räumliche Darstellung der Abschließvorrichtung mit einem Ausleger und Halteeinrichtungen
- Fig. 4: zeigt die räumliche Darstellung der Abschließvorrichtung mit geschlossener Platte und Halteinrichtungen.
- Fig. 5: zeigt die räumliche Darstellung der Abschließvorrichtung ohne Halteeinrichtungen.
- Fig. 6: zeigt die Seitenansicht der Abschließvorrichtung mit Fahrrad.
- Fig. 7: zeigt die räumliche Darstellung der Abschließvorrichtung mit Halteeinrichtung.
- Fig. 8: zeigt die Seitenansicht der Abschließvorrichtung

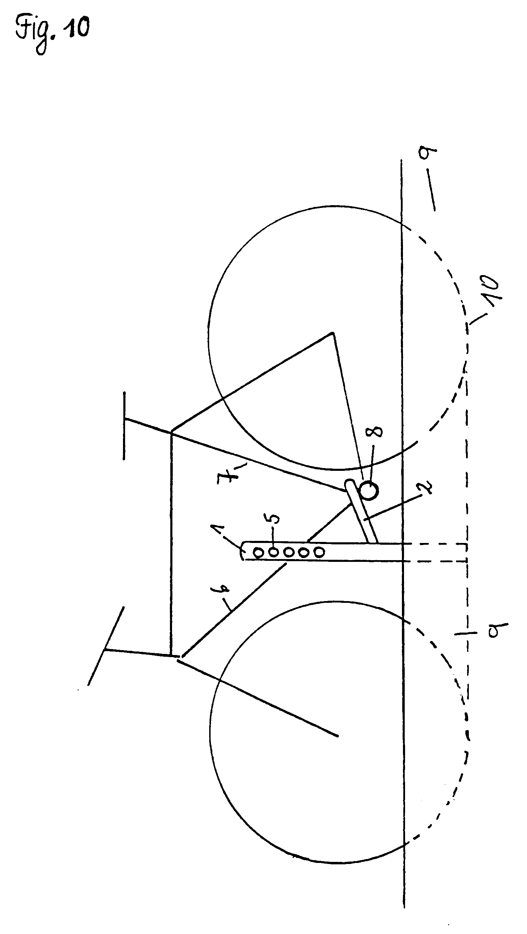

- Fig. 9: zeigt die Draufsicht der Abschließvorrichtung
- Fig.10: zeigt die Seitenansicht der Abschließvorrichtung mit Halteeinrichtung als Veriefung im Untergrund.

Die Abschließvorrichtung gemäB Anspruch 1 besteht aus zwei im Abstand zueinander angeordneten Armen (1), die aus Rund- oder Kantrohren, Rund- oder Kanteisen, oder anderen geeigneten Materialien wie z. B. Kunststoffe gefertigt sein können. Das InnenmaB der Arme(l) beträgt wahlweise beim Durchschub des Fahrrades ca. Gabelbreite, beim Einheben des Rades . mindestens Rahmenstärke des Unterrohres (6).

Die Arme (1) sind im wesentlichen senkrecht nach oben gerichtet und mit jweils einer Reihe von Bohrungen (5) versehen deren Querschnitt so groB ist, daB alle gängigen Fahrradschlösser (15) eingeschoben werden können.

An dem, dem Zahnkranz gegenüberliegenden Arm (1) ist in einer bestimmten Höhe und in einem bestimmten Winkel ein Ausleger (2) angebracht, der ein Widerlager zum Tretlager (8) des Fahrrades bildet. Durch die Anbringung des Auslegers (2) in einem bestimmten Winkel am Arm (1) wird erreicht, daß das Tretlager (8) aller gängigen Fahrradgrößen unter den Ausleger(2) bis zum Anschlag geschoben werden kann.

Schiebt man ein beliebiges Fahrrad mit seinem Tretlager (8) unter den Ausleger (2) bis zum Anschlag und steckt man nun das Fahrradschloß(15) durch die auf gleicher Höhe liegenden Bohrungen (5) beider Arme (1) die dem Unterrohr (6) am nächsten liegen, so ist das Fahrrad fest zum Untergrund (9) fixiert und in keiner Richtung mehr bewegbar.

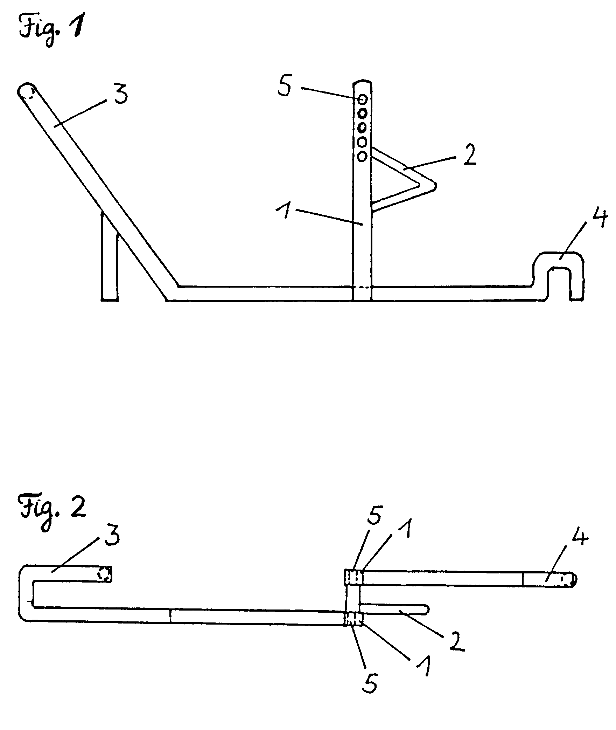

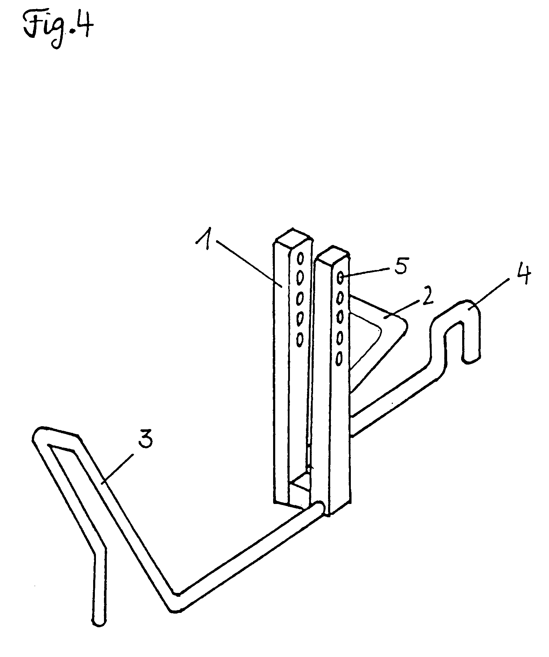

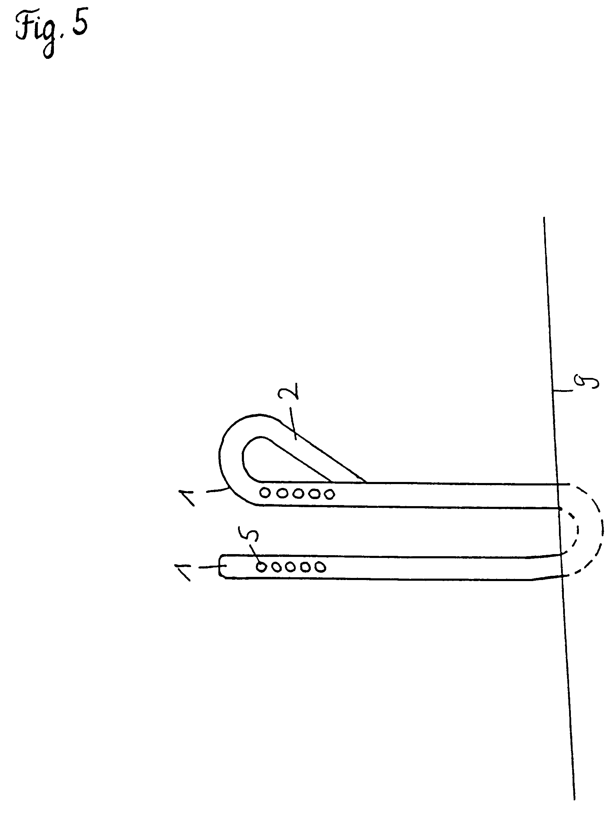

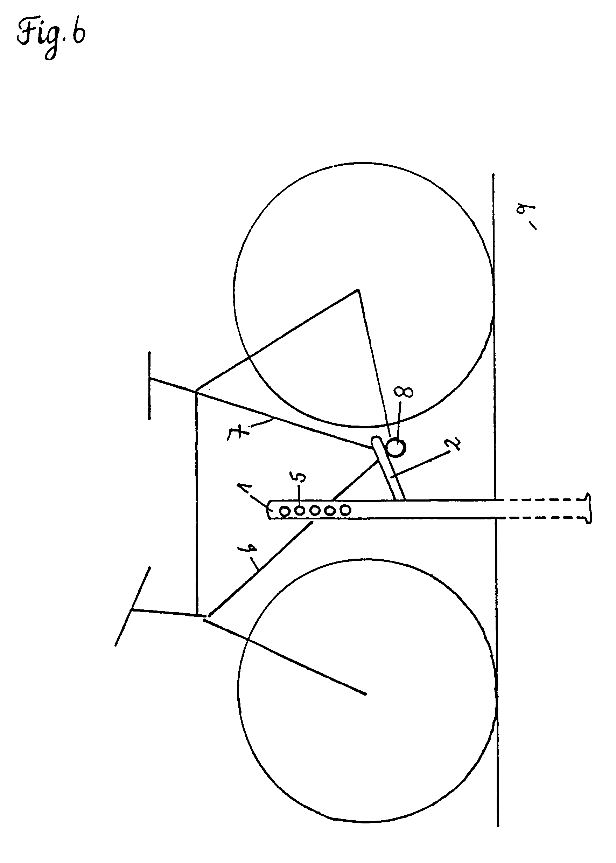

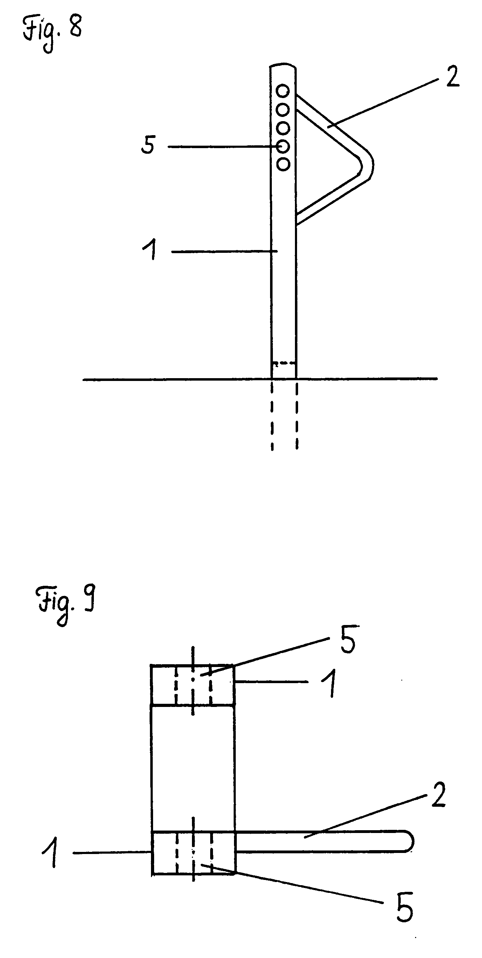

Der Ausleger (2) kann aus in nur einer Stelle am Arm (1) winkelig angeschweißten Rohr bestehen (Fig. 3, 6, 7, 10) aber auch an zwei Stellen am Arm (1) angebracht sein (Fig. 1, 8) und mit dem oberen Teil des Armes (1) ein Dreieck mit abgerundeten Ecken bilden, oder aus einer Metallplatte bestehen, mit der Form eines Dreiecks, dessen unterer Schenkel wieder den bestimmten Winkel beschreibt. (Fig. 4) Es ist auch möglich, daß die Abschließvorrichtung aus einem Rohr gebogen ist, wenn das Rohr einem im bestimmten Winkel verlaufenden Ausleger und die beiden Arme (1) mit obenliegenden, vertikal gereihten Bohrungen aufweist. Fig. 5

Prinzipiell ist es möglich, daß als Ausleger (2) alle möglichen Formen denkbar sind die gestalterische oder verletzungsverhütende Bedeutung haben, ansonsten ist nur der bestimmte Winkel wirksam, der sich von Arm (1) weg in Bezug auf den Untergrund (9) öffnet.

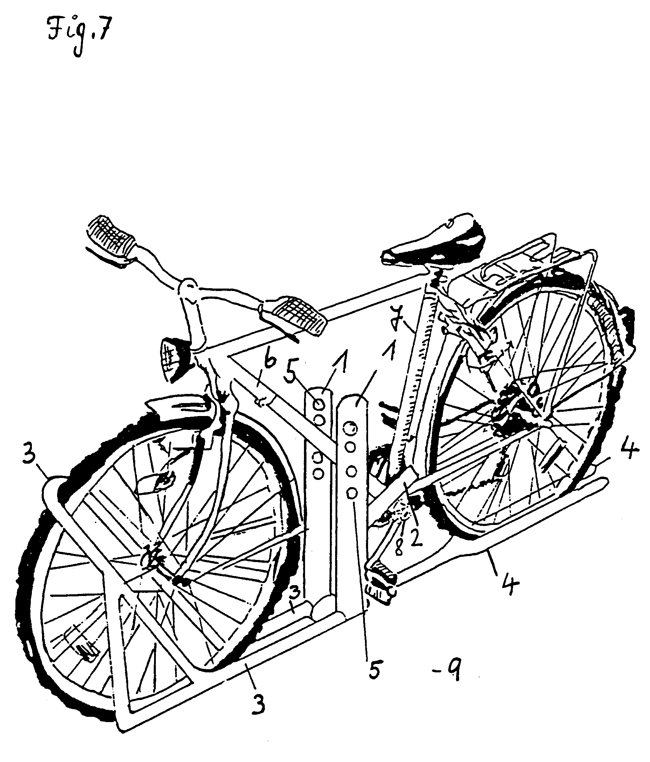

In der folgenden Beschreibung eines Ausführungsbeispiels (Fig. 10) wird die Beschreibung der Abschließvorrichtung (Fig. 8) nicht wiederholt beschrieben, sondern nur noch als Abschließvorrichtung erwähnt, die im engen Zusammenhang mit den Hilfspunkten (3, 4) die zur zusätzlichen Vorder- und Hinterradsicherung nötig sind, steht. Die Abschließvorrichtung in diesem Ausführungsbeispiel ist mit einer rinnen- oder teilkreisförmigen Vertiefung im Untergrund ungefähr mittig gekoppelt. Die Arme der Abschließvorrichtung sind dauerhaft in ein Betonfundament eingegossen (Fig.7) oder auf ein Betonfundament haltbar verschraubt. Die Vertiefung im Untergrund (9) dient als zusätzliche Halte- und Sicherungseinrichtung für das Vorder- und Hinterrad.

(Fig. 10). Vorder- und Hinterrad sind, ohne diese Teile zu beschädigen, nicht mehr bewegbar. Rinnen- oder teilkreisförmige Vertiefungen (10) können aus verschiedenen Materialien gefertigt sein: z. B. Beton, Metall oder Kunststoffe.

Andere Ausführungsbeispiele für Halteeinrichtungen, mittig gekoppelt mit der Abschließvorrichtung, sind Metallrohre oder -profile, die das Vorder- und Hinterrad in verschiedenstens Formen umgreifen und somit sichern.

## Patentansprüche

1. Abschließbarer Fahrradständer, bei dem eine den Rahmen des Fahrrades umfassende Abschließvorrichtung vorhanden ist, mittels der, der Rahmen des Fahrrades an dem Ständer diebstahlsicher festlegbar ist; wobei die Abschließvorrichtung aus zwei im Abstand zueinander angeordneten, im wesentlichen senkrecht nach oben ragenden Armen besteht,
dadurch gekennzeichnet, daß
die Arme mit einer Reihe von Bohrungen(5), zur Einschiebung eines Schlosses versehen sind, und daß der vom Antriebszahnkranz des Fahrrades abgewandte Arm einen Ausleger(2) aufweist, der ein Widerlager zum Tretlager(8) des Fahrrades bildet.

2. Abschließbarer Fahrradständer nach Anspruch 1, dadurch gekennzeichnet, daB die Halteeinrichtungen(3,4) für das Vorder- und Hinterrad aus Rohren oder Profilen be stehen.

3. Abschließbarer Fahrradständer nach Anspruch 2, dadurch das Vorder- und Hinterrad aus Metall gefertigt sind.

4. Abschließbarer Fahrradständer nach Anspruch 2 dadurch gekennzeichnet, daß Halteeinrichtungen(3,4) für das Vorder- und Hinterrad aus Kunststoff gefertigt sind.

5. Abschließbarer Fahrradständer nach Anspruch 2 oder 3, dadurch gekennzeichnet, daß die Halteeinrichtung(3,4) für das Vorderrad aus einem, das Vorderrad umgreifenden, es zur Seite und nach vorne sichernden Bügel besteht.

6. Abschließbarer Fahrradständer nach einem der Ansprüche 2 bis 4, dadurch gekennzeichnet, daß die Halteeinrichtung(3,4) für das Hinterrad von einem, das Hinterrad links und rechts unten umgreifenden, in Fahrtrichtung nach hinten offenen, gabelförmigen Bauteil besteht.

7. Kraftfahrzeug mit einem abschließbaren Fahrradständer nach einem der vorhergehenden Ansprüche als Transportbefestigung für Fahrräder.

8. Abschließbarer Fahrradständer nach Anspruch 1, dadurch gekennzeichnet, daB der Ausleger(2) für das Tretlager nach hinten weist.

9. Abschließbarer Fahrradständer nach Anspruch 1, dadurch gekennzeichnet, das die Halteeinrichtungen(3,4) für das Vorder-und Hinterrad aus rinnen- oder teil kreisförmigen Vertiefungen (10) im Untergrund (9)bestehen, die eine geringfügig größere Breite wie die Räder des Fahrrades aufweisen.

## Claims

1. Lockable bicycle stand that has a locking device which encompasses the bicycle frame and through which the frame of the bike can be fastened theft-proof to the stand; whereby the locking device consists out of two for the most part upwards pointing arms, arranged distant to one another, identified due to the fact that the arms are provided with a row of drillings (5) for pushing in a lock, and that the arm pointing away from the driving toothed wheel of the bike shows a jib (2) which forms an abutment to the pedal bearing (8) of the bike.

2. Lockable bicycle stand according to claim 1, identified due to the fact that the holding devices (3, 4) for the front and back wheel consist out of tubes or profiles.

3. Lockable bicycle stand according to claim 2, identified due to the fact that the front and back wheel consist out of metal.

4. Lockable bicycle stand according to claim 2, identified due to the fact that the holding devices (3, 4) for the front and back wheel consist out of plastics.

5. Lockable bicycle stand according to claim 2, identified due to the fact that the holding device (3, 4) for the front wheel consists out of a shackle that encompasses the front wheel and secures it to the side and to the front.

6. Lockable bicycle stand according to one of the claims 2 to 4, identified due to the fact that the holding device (3, 4) for the back wheel consists out of a fork-like component which opens backwards and encompasses the back tire at the left side and at the lower right side.

7. Motor vehicle with a lockable bicycle stand according to one of the preceding claims as fixing device for bikes during transports.

8. Lockable bicycle stand according to claim 1, identified due to the fact that the jib (2) for the pedal bearing points backwards.

9. Lockable bicycle stand according to claim 1, identified due to the fact that the holding devices (3, 4) for the front and back wheel consist out of a channel-like or limb-like deepening (10) in the ground (9) that show a slightly bigger width than the wheels of the bike.

## Revendications

1. Support pour bicyclettes pouvant être fermé, assorti d'un dispositif de fermeture entourant le cadre de la bicyclette de telle manière qu'il puisse être enserré dans le support en le protégeant ainsi du vol. Le dispositif de fermeture est ici constitué de deux bras globalement verticaux et regardant vers le haut, portant une série de forures (6) en vue de l'introduction d'un cadenas et conçus de telle manière que le bras le plus éloigné du plateau de pédalier est assorti d'un porte-en-dehors (2) formant un contrepoids par rapport au pédalier (8) de la bicyclette.

2. Support pour bicyclettes pouvant être fermé aux termes de la spécification 1), caractérisé par le fait que les dispositifs de maintien (3, 4) pour les roues avant et arrière consistent en des tuyaux ou des profils.

3. Support pour bicyclettes pouvant être fermé aux termes de la spécification 2), caractérisé par le fait que les dispositifs de maintien (3, 4) pour les roues avant et arrière sont faits en métal.

4. Support pour bicyclettes pouvant être fermé aux termes de la spécification 2), caractérisé par le fait que les dispositifs de maintien (3, 4) pour les roues avant et arrière sont faits en matière synthétique.

5. Support pour bicyclettes pouvant être fermé aux termes de la spécification 2) ou 3), caractérisé par le fait que le dispositif de maintien (3, 4) pour la roue avant consiste en une monture qui entoure cette roue et la bloque vers l'avant et vers le côté.

6. Support pour bicyclettes pouvant être fermé aux termes des spécifications 2) et 4), caractérisé par le fait que le dispositif de maintien (3, 4) pour la roue arrière consiste en un élément de construction en forme de fourche, entourant la roue arrière en bas à droite comme à gauche et ouvert vers l'arrière dans la direction de la circulation.

7. Véhicule automobile muni d'un support pour bicyclettes conformément à l'une des spécifications précédentes conçu comme fixation de bicyclettes en vue de leur transport.

8. Support pour bicyclettes conformément à la spécification 1), caractérisé par le fait que le porte-en-dehors pour le pédalier est dirigé vers l'arrière.

9. Support pour bicyclettes conformément à la spécification 1), caractérisé par le fait que les dispositifs de maintien (3. 4) pour la roue avant et arrière consistent en des cavités (10) au sol en forme de conduit ou de limbe, d'une largeur légèrement supérieure à celle des roues de la bicyclette.
